# FASCICULE DE BREVET EUROPEEN

(11) **EP 0 939 216 B1**
(45) Date de publication et mention de la délivrance du brevet: **16.06.2004**
(21) Numéro de dépôt: 99400280.6
(22) Date de dépôt: 08.02.1999
(51) Int. Cl.: F02K 7/18

(54) **Moteur mixte susceptible de mettre en oeuvre au moins un mode statoréacteur et un mode superstatoréacteur**
Antriebsanlage mit mindestens einem sowohl mit Überschall- als auch Unterschallverbrennung arbeitenden Staustrahlantrieb
Integrated propulsion plant with at least a ramjet and a scramjet operational mode

(30) Priorité: 27.02.1998 FR 9802420
(43) Date de publication de la demande: 01.09.1999
(73) Titulaire: AEROSPATIALE MATRA, 75016 Paris (FR)
(72) Inventeur: Bouchez, Marc, 18000 Bourges (FR)
(74) Mandataire: Bonnetat, Christian

(56) Documents cités:
- FR-A- 2 701 293
- US-A- 5 135 184
- US-A- 5 167 117
- US-A- 5 191 761

## Description

La présente invention concerne un moteur mixte susceptible de mettre en oeuvre au moins un mode statoréacteur et un mode superstatoréacteur. Un moteur muselé est connu du document US-A- 5 191 761.

Dans le cadre de la présente invention, un tel moteur mixte est un moteur aérobie très performant fonctionnant sur une large plage de vitesses, par exemple de Mach 2 à Mach 12 :
- d'abord, en combustion subsonique pure (représentant ledit mode statoréacteur) pour des vitesses comprises par exemple entre Mach 2 et Mach 6 ;
- ensuite, en combustion supersonique (représentant ledit mode superstatoréacteur) pour des vitesses comprises par exemple entre Mach 6 et Mach 12.

En particulier, en raison de la large plage de fonctionnement possible et d'une faible consommation spécifique de combustible, les moteurs mixtes du type précité sont particulièrement appropriés à la propulsion d'engin volants hypersoniques (missiles, avions, etc ...). En fonction de l'application, et éventuellement de la phase de vol considérée de l'engin volant, le combustible utilisé peut être un hydrocarbure liquide, tel que le kérosène, ou un gaz, tel que l'hydrogène et le méthane, le comburant étant l'air.

De façon connue, un tel moteur mixte comporte au moins un système moteur principal qui brûle du combustible et qui comprend au moins une entrée d'air pour une veine d'air, une chambre de combustion principale et une tuyère d'échappement principale, en mode statoréacteur une partie de l'air capté par ladite prise d'air étant détournée de la veine d'air avant son entrée dans ladite chambre de combustion. Cet air (ou "couche limite"), qui est détourné de façon usuelle à l'aide d'un ou de plusieurs "pièges à couche limite" (connus sous la dénomination anglaise de "boundary layer bleed" dans le domaine technique des moteurs et propulseurs), s'écoule près des parois de la prise d'air et possède une énergie réduite.

Un inconvénient important d'un tel moteur mixte est qu'en mode superstatoréacteur, la poussée fournie par le moteur est souvent insuffisante, surtout pour atteindre de très hautes vitesses, notamment au-delà de Mach 10.

On sait que, pour de telles vitesses élevées, la contribution de l'énergie et de la quantité de mouvement du combustible injecté, généralement de l'hydrogène, joue un rôle très important dans la propulsion. De plus, souvent le combustible est injecté avec un rapport de mélange supérieur à la valeur stoechiométrique. On a donc intérêt pour augmenter les performances du moteur à injecter du combustible le plus chaud possible.

Une solution usuelle pour chauffer le combustible est d'utiliser le circuit de refroidissement du moteur. Le combustible circule alors dans les parois du moteur, les refroidit et s'y échauffe.

Toutefois, un tel échauffement est limité, notamment par la chaleur apportée pour l'écoulement de gaz chauds dans le moteur, par des contraintes liées au circuit de refroidissement (efficacité, ...) et par la température maximale de la peau chaude des composants du moteur, qui doit être inférieure à celle admissible en fonctionnement pour le matériau constituant les parois.

Cette solution connue pour chauffer le combustible n'est donc guère satisfaisante.

La présente invention a pour objet de remédier à ces inconvénients. Elle concerne un moteur mixte du type précité, pour lequel, par des moyens simples et peu coûteux, on augmente considérablement la poussée et les performances en mode superstatoréacteur.

A cet effet, selon l'invention, ledit moteur mixte comporte :
- des premiers moyens pour stocker, en mode statoréacteur, l'air ainsi détourné ; et
- des seconds moyens pour brûler, en mode superstatoréacteur, une partie d'un combustible dudit moteur avec l'air stocké par lesdits premiers moyens, avant de l'injecter dans ledit système moteur principal.

Ainsi, grâce à l'invention, on est en mesure d'augmenter considérablement la poussée et les performances du moteur mixte en brûlant une partie du combustible, par exemple de l'hydrogène, avec de l'air stocké, de manière notamment à chauffer le reste de combustible.

Pour bien mettre en évidence les avantages obtenus par la présente invention, on peut donner un exemple chiffré. On sait qu'à Mach 12, si on chauffe à 1500K le combustible (hydrogène) qui est injecté usuellement à 1000K, la poussée du moteur est augmentée de 15% et la consommation spécifique dudit moteur est diminuée de 15%, tandis que l'impulsion spécifique du véhicule équipé dudit moteur mixte est augmentée de 20 à 25%. Or, un échauffement à une telle température peut être facilement réalisé grâce à l'invention.

En plus de l'échauffement de l'hydrogène, la quantité de masse de l'air liquide supplémentaire entraîne aussi une augmentation des performances du moteur en mode superstatoréacteur.

De plus, l'invention apporte une solution pour utiliser l'air détourné (de la "couche limite") qui nécessite dans les moteurs usuels des moyens spécifiques pour son éjection à l'extérieur du moteur, et qui ne doit pas perturber le fonctionnement de ce dernier.

En outre, de façon avantageuse, lesdits premiers moyens comprennent des moyens pour refroidir et liquéfier l'air détourné et au moins un réservoir de stockage pour stocker l'air ainsi liquéfié.

De plus, de préférence :
- lesdits moyens pour liquéfier l'air comportent au moins un échangeur utilisant un combustible du moteur ; et
- ledit échangeur utilise de plus un fluide auxiliaire destiné à éviter, en cas de fuites, tout contact entre l'air et ledit combustible.

Par ailleurs, avantageusement, lesdits seconds moyens comportent au moins une chambre de combustion auxiliaire munie au moins d'une tuyère d'échappement secondaire.

Dans ce cas, différents modes de réalisation sont envisageables. Notamment, de façon avantageuse :
- ladite tuyère d'échappement secondaire est agencée de manière à déboucher dans ladite chambre de combustion principale et/ou dans ladite tuyère d'échappement principale ; et
- dans le cas d'un moteur comportant au moins un dispositif d'injection pour injecter un combustible dans une chambre d'injection située en amont de la chambre de combustion principale dans le sens d'écoulement de l'air, ladite chambre de combustion auxiliaire est agencée dans ledit dispositif d'injection et ladite tuyère d'échappement secondaire débouche dans ladite chambre d'injection.

Dans ce dernier mode de réalisation, de préférence, le moteur comporte une pluralité de chambres de combustion auxiliaires agencées dans ledit dispositif d'injection, ce qui permet d'homogénéiser et/ou d'amplifier la combustion.

Par ailleurs, dans un mode de réalisation avantageux, le moteur mixte conforme à l'invention intègre de plus un mode accélérateur, pour au moins une accélération initiale, dans lequel on réalise une combustion utilisant du comburant, par exemple de l'oxygène, qui est stocké dans un réservoir à comburant, et ledit réservoir de stockage de l'air détourné correspond audit réservoir à comburant, qui est au moins partiellement vidé après l'accélération initiale et peut ainsi recevoir l'air détourné en mode statoréacteur. Par conséquent, il n'est pas nécessaire de prévoir un réservoir supplémentaire spécifique pour le stockage de l'air détourné, ce qui est avantageux en termes de coût et d'encombrement.

Les figures du dessin annexé feront bien comprendre comment l'invention peut être réalisée. Sur ces figures, des références identiques désignent des éléments semblables.

La figure 1 montre schématiquement un moteur mixte conforme à l'invention.

Les figures 2 à 6 illustrent différentes phases de fonctionnement successives du moteur mixte de la figure 1.

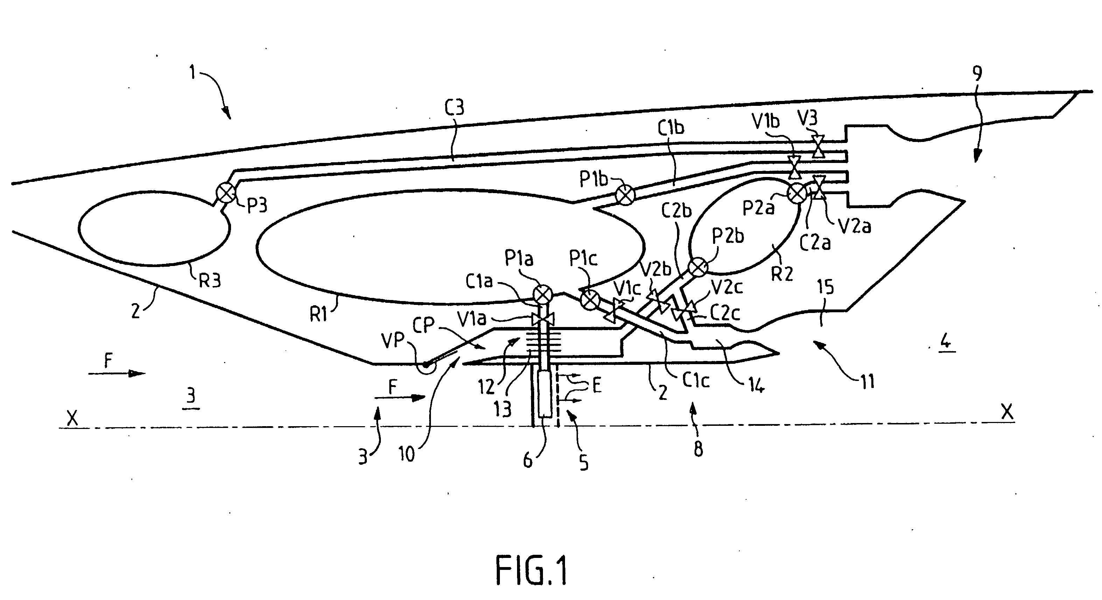

Le moteur mixte 1 conforme à l'invention et représenté schématiquement sur la figure 1 est destiné à la propulsion d'un engin volant hypersonique (missile, avion, ...) non représenté et devant voler dans une large plage de nombre de Mach, par exemple d'un nombre de Mach nul à un nombre de Mach de l'ordre de 12 à 15.

Ledit moteur mixte 1 est un moteur aérobie très performant qui comporte, de façon connue, une enveloppe 2 symétrique en rotation par rapport à un axe X-X et pourvue, à l'une de ses extrémités, d'une prise d'air 3 pour une veine d'air (symbolisée par une flèche F) devant servir de comburant et, à son extrémité opposée, d'une tuyère 4.

En aval de la prise d'air 3, l'enveloppe 2 forme une chambre d'injection 5, à l'intérieur de laquelle est disposé un dispositif d'injection 6 de type connu comprenant par exemple un ou plusieurs mâts d'injection non représentés.

Ledit dispositif d'injection 6 prélève, par l'intermédiaire d'un conduit d'alimentation C1a muni d'une pompe P1a et d'une vanne V1a, du combustible d'un réservoir R1, dans lequel il est stocké, et l'injecte dans ladite chambre d'injection 5, comme illustré par des flèches E.

En outre, entre la chambre d'injection 5 et la tuyère 4, l'enveloppe 2 délimite une chambre de combustion 8, à la partie amont de laquelle sont prévus des allumeurs non représentés.

Ainsi, le combustible injecté est réparti dans toute la veine F de comburant, au niveau du dispositif d'injection 6; et la combustion du flux du mélange comburant-combustible se produit dans la chambre de combustion 8, après quoi les gaz de combustion sont éjectés à travers la tuyère 4.

On notera que, comme combustible, on peut utiliser du kérosène pour les nombres de Mach de vol les plus faibles (jusqu'à Mach 8) (éventuellement avec un barbotage d'hydrogène de façon à faciliter l'allumage du statoréacteur et l'éclatement du jet), puis de l'hydrogène pour les nombres de Mach plus élevés. D'autres combustibles, tels que du méthane, des hydrocarbures endothermiques, des combustibles de synthèse, peuvent également être employés pour un moteur mixte de ce type.

Toutefois, dans le mode de réalisation préféré représenté et décrit ci-dessous sur la figure 1, le combustible stocké dans le réservoir R1 est de l'hydrogène.

Le moteur mixte 1 ainsi formé est susceptible de fonctionner :
- d'abord, en combustion subsonique pure (représentative d'un mode statoréacteur) pour des vitesses comprises par exemple entre Mach 2 et Mach 6 ;
- ensuite, en combustion supersonique (représentative d'un mode superstatoréacteur) pour des vitesses comprises par exemple entre Mach 6 et Mach 12.

On notera que les moyens 3, 4, 5 et 8 précités forment un système moteur principal du moteur 1.

Selon l'invention, ledit moteur mixte 1 intègre de plus un mode accélérateur mis en oeuvre par un moteur fusée 9 de type usuel.

Ledit moteur fusée 9 est susceptible d'engendrer :
- une accélération initiale jusqu'à Mach 2 environ, en brûlant de l'hydrogène issu du réservoir R1 et reçu par l'intermédiaire d'un conduit d'alimentation C1b muni d'une pompe P1b et d'une vanne V1b, avec du comburant (oxygène) stocké dans un réservoir R2 et reçu par l'intermédiaire d'un conduit d'alimentation C2a muni d'une pompe P2a et d'une vanne V2a ; et éventuellement
- une accélération terminale, au-delà de Mach 12 environ, en brûlant de l'hydrogène issu du réservoir R1 avec du comburant (oxygène) stocké dans un réservoir R3 et reçu par l'intermédiaire d'un conduit d'alimentation C3 muni d'une pompe P3 et d'une vanne V3.

Le moteur 1 tel que précisé précédemment est perfectionné selon l'invention de sorte que sa poussée et ses performances sont considérablement augmentées en mode superstatoréacteur.

Pour ce faire, selon l'invention, ledit moteur 1 comporte de plus :
- des moyens 10 pour stocker, en mode statoréacteur, de l'air détourné de la veine principale d'air F. On notera que cet air détourné, qui est de l'air qui s'écoule près des parois de la prise d'air 3 et possède une énergie réduite, est gênant et est éliminé généralement, dans les moteurs usuels, à l'aide de "pièges à couche limite" ; et
- des moyens 11 pour brûler, en mode superstatoréacteur, du combustible stocké dans le réservoir R1 avec l'air détourné et stocké par lesdits moyens 10, avant de l'injecter dans le système moteur principal.

Selon le mode de réalisation, cette injection peut se faire dans la chambre d'injection 5, dans la chambre de combustion 8 ou dans la tuyère 4.

Ainsi, par la combustion en mode superstatoréacteur d'une partie de l'hydrogène du réservoir R1 avec l'air stocké, on augmente la température de l'hydrogène restant qui est brûlé de façon usuelle dans la chambre de combustion 8.

Par conséquent, la présente invention entraîne un apport d'énergie, ce qui augmente considérablement la poussée et les performances du moteur 1 en mode superstatoréacteur.

Les performances sont également augmentées par la quantité de masse de l'air liquide supplémentaire utilisé conformément à la présenté invention.

Lesdits moyens 10 comportent :
- un conduit de prélèvement CP de l'air détourné qui est relié à un conduit d'alimentation C2b muni d'une pompe P2b et d'une vanne V2b du réservoir R2. Ledit conduit de prélèvement CP débouche au niveau de la prise d'air 3 et y est muni d'une vanne VP (ou d'un volet mobile) susceptible d'être ouverte ou fermée ; et
- des moyens 12 de type connu pour refroidir et liquéfier l'air détourné avant de le stocker dans ledit réservoir R2.

A cet effet, lesdits moyens 12 comportent :
- au moins un échangeur 13 qui utilise de l'hydrogène reçu du réservoir R1 par le conduit C1a. Selon l'invention, ledit échangeur 13 utilise de plus un fluide auxiliaire, par exemple de l'hélium, destiné à éviter en cas de fuites, tout contact entre l'air et le combustible ;
- la pompe P2b ou un surpresseur ; et
- la vanne V2b.

Par ailleurs, les moyens 11 précités comportent :
- une chambre de combustion 14 reliée aux réservoirs R1 et R2 respectivement par l'intermédiaire d'un conduit d'alimentation C1c (muni d'une pompe P1c et d'une vanne V1c) et d'un conduit C2c (muni d'une vanne V2c et relié au conduit C2b) ; et
- une tuyère d'échappement 15 agencée à la sortie de ladite chambre de combustion 14.

Dans le mode de réalisation représenté sur la figure 1, ladite tuyère d'échappement 15 débouche dans la tuyère 4.

Dans un autre mode de réalisation non représenté, ladite tuyère d'échappement 15 peut également déboucher dans la chambre de combustion 8 ou dans la chambre d'injection 5.

De plus, dans le cadre de la présente invention, les moyens 11 peuvent comporter une pluralité de chambres de combustion 14 et/ou de tuyères d'échappement 15.

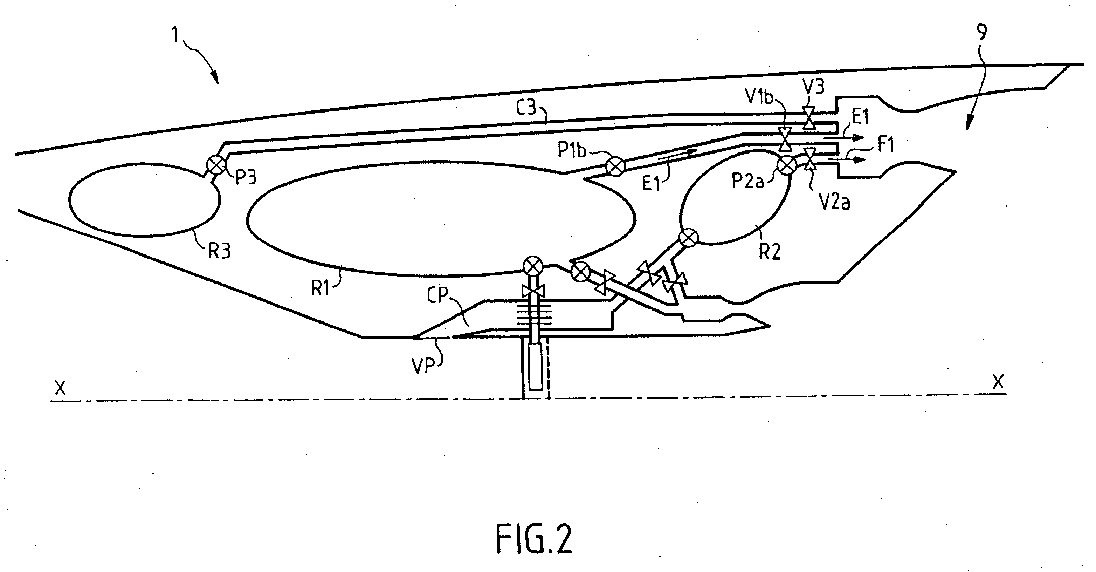

On précise ci-après, en référence aux figures 2 à 6, les différentes phases de fonctionnement successives du moteur 1, de l'arrêt jusqu'à un nombre de Mach maximal de l'ordre de 15, à savoir :
- une phase d'accélération initiale, par exemple jusqu'à Mach 2 ;
- une phase en mode statoréacteur, par exemple jusqu'à Mach 6 ;
- une phase en mode superstatoréacteur, par exemple jusqu'à Mach 12 ; et
- une phase d'accélération terminale.

On notera qu'initialement, le réservoir R1 est rempli de combustible (hydrogène) et les réservoirs R2 et R3 de comburant (oxygène). On indiquera ci-après les flux de comburant par des flèches F et les flux de combustible par des flèches E, suivies par des chiffres permettant de les différencier.

En phase initiale d'accélération, seul le moteur fusée 9 fonctionne et il brûle de l'hydrogène issu du réservoir R1, comme illustré par des flèches E1 sur la figure 2, avec de l'oxygène issu du réservoir R2, comme illustré par une flèche F1.

Par conséquent, seules les vannes V1b et V2a sont ouvertes et seules les pompes P1b et P2a sont en fonctionnement, tandis que les autres vannes du moteur 1 sont fermées et les autres pompes à l'arrêt.

De plus, la vanne VP du conduit Cp peut :
- soit être ouverte de manière à servir de piège à couche limite, en prévoyant une évacuation non représentée de l'air détourné ;
- soit être fermée, comme représenté sur la figure 2.

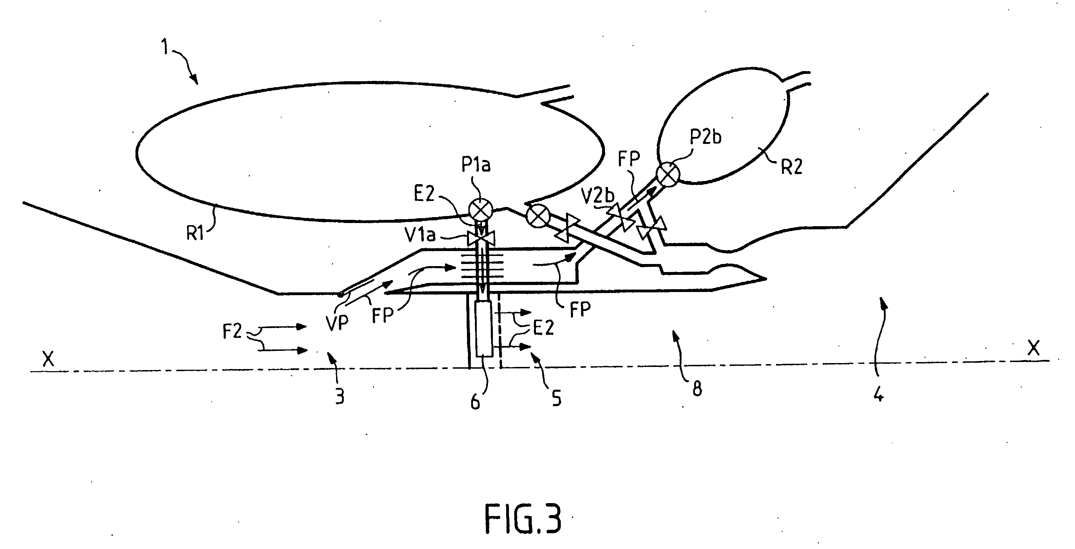

Dans la phase suivante en mode statoréacteur, le moteur 1 fonctionne de façon usuelle, tel que représenté sur la figure 3, en brûlant dans la chambre de combustion 8, de l'hydrogène injecté dans la chambre d'injection 5, comme indiqué par des flèches E2, avec l'air de la veine principale illustrée par des flèches F2.

De plus, conformément à l'invention, la vanne VP est ouverte et une partie de l'air (la couche limite) de ladite veine principale F2 est détournée, comme indiqué par des flèches FP, et est stockée dans le réservoir R2 qui a été au moins partiellement vidé lors de l'accélération initiale.

Dans cette deuxième phase, uniquement les vannes V1a, V2b et VP sont ouvertes et uniquement les pompes P1a et P2b sont en fonctionnement.

A la fin de cette deuxième phase, on ferme la vanne VP de manière à ne plus détourner d'air, ainsi que la vanne V2b associée au réservoir R2.

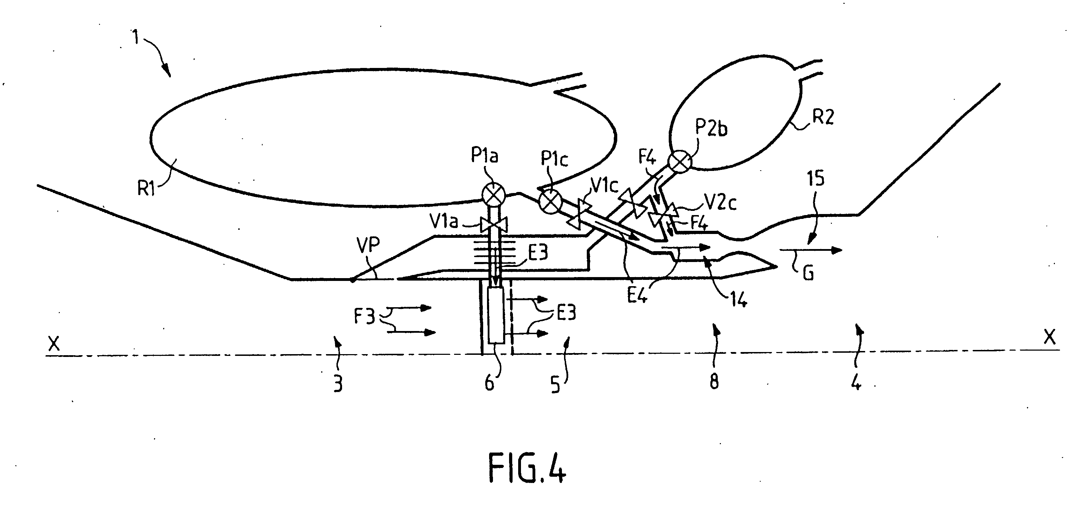

La phase suivante en mode superstatoréacteur peut être divisée en deux sous-phases :
- une première sous-phase qui correspond à un fonctionnement usuel en mode superstatoréacteur. L'hydrogène du réservoir R1 est brûlé dans la chambre de combustion 8 avec l'air de la veine principale, comme illustré par des flèches E3 et F3 sur la figure 4 ; et
- une seconde sous-phase, dans laquelle en plus des éléments de la première sous-phase, on fait également fonctionner les moyens 11, tel qu'également représenté sur la figure 4.

A cet effet, on brûle dans la chambre de combustion 14 de l'hydrogène issu du réservoir R1, comme illustré par des flèches E4 avec de l'air issu du réservoir R2, comme illustré par des flèches F4. Les gaz obtenus par cette combustion sont injectés dans la tuyère 4 par l'intermédiaire de la tuyère d'échappement 15, comme illustré par une flèche G.

Dans ce cas :
- seules les vannes V1a, V1c et V2c sont ouvertes ; et
- seules les pompes P1a, P1c et P2b sont en fonctionnement.

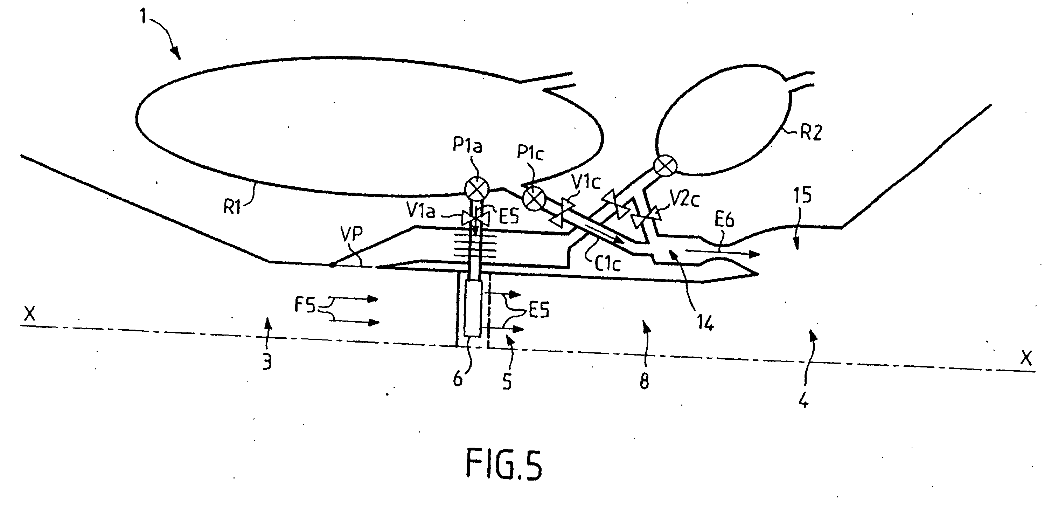

En mode superstatoréacteur, le moteur 1 peut également fonctionner en réalisant une combustion à partir de deux zones d'injection, tel que représenté sur la figure 5, sans utiliser l'air du réservoir R2.

A cet effet, on injecte de l'hydrogène du réservoir R1 :
- d'une part, dans la chambre d'injection 5, comme illustré par des flèches E5 ; et
- d'autre part, dans la tuyère 4 par l'intermédiaire du conduit C1c, de la chambre 14 et de la tuyère d'échappement 15, comme illustré par des flèches E6.

Cet hydrogène est brûlé avec l'air de la veine principale F5.

Dans ce mode de mise en oeuvre, la vanne V2c est fermée et aucune combustion n'est réalisée dans la chambre 14.

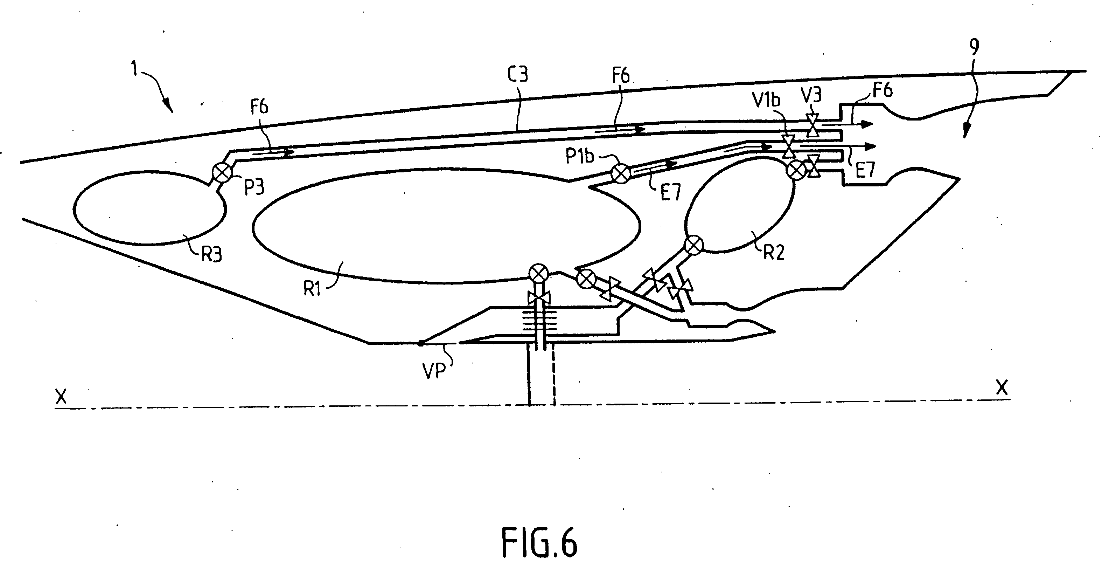

Finalement, la présente invention permet également de mettre en oeuvre une accélération terminale, tel que représenté sur la figure 6, dans laquelle seul le moteur fusée 9 fonctionne et brûle de l'hydrogène du réservoir R1 (flèches E7) avec de l'oxygène du réservoir R3 (flèches F6).

Dans ce cas, uniquement les vannes V1b et V3 sont ouvertes et uniquement les pompes P1b et P3 sont en fonctionnement.

On notera de plus que, dans le cadre de la présente invention, le moteur 1 peut comporter plusieurs réservoirs à hydrogène, utilisés simultanément ou successivement.

## Revendications

1. Moteur mixte du type susceptible de mettre en oeuvre au moins un mode statoréacteur et un mode superstatoréacteur et comportant au moins un système moteur principal (3, 4, 5, 8) qui brûle du combustible et qui comprend au moins une entrée d'air (3) pour une veine d'air (F), une chambre de combustion principale (8) et une tuyère d'échappement principale (4), une partie de l'air capté par ladite entrée d'air (3) étant détournée de la veine d'air (F) avant son entrée dans ladite chambre de combustion (8) et stockée dans des premiers moyens (10),
**caractérisé :**
- **en ce que** lesdits premiers moyens (10) stockent l'air ainsi détourné en mode statoréacteur ; et
- **en ce que** sont prévus des seconds moyens (11) pour brûler, en mode superstatoréacteur, une partie d'un combustible dudit moteur (1) avec l'air stocké par lesdits premiers moyens (10), avant de l'injecter dans ledit système moteur principal (3, 4, 5, 8).

2. Moteur selon la revendication 1,
**caractérisé en ce que** lesdits premiers moyens (10) comprennent des moyens (12) pour refroidir et liquéfier l'air détourné et au moins un réservoir de stockage (R2) pour stocker l'air ainsi liquéfié.

3. Moteur selon la revendication 2,
**caractérisé en ce que** lesdits moyens (12) pour liquéfier l'air comportent au moins un échangeur (13) utilisant un combustible du moteur (1).

4. Moteur selon la revendication 3,
**caractérisé en ce que** ledit échangeur (13) utilise de plus un fluide auxiliaire destiné à éviter, en cas de fuites, tout contact entre l'air et ledit combustible.

5. Moteur selon l'une quelconque des revendications 1 à 4,
**caractérisé en ce que** lesdits seconds moyens (11) comportent au moins une chambre de combustion auxiliaire (14) munie au moins d'une tuyère d'échappement secondaire (15).

6. Moteur selon la revendication 5, **caractérisé en ce que** ladite tuyère d'échappement secondaire est agencée de manière à déboucher dans ladite chambre de combustion principale (8).

7. Moteur selon l'une des revendications 5 et 6, **caractérisé en ce que** ladite tuyère d'échappement secondaire (15) est agencée de manière à déboucher dans ladite tuyère d'échappement principale (4).

8. Moteur selon l'une des revendications 5 à 7, comportant au moins un dispositif d'injection (6) pour injecter un combustible dans une chambre d'injection (5) située en amont de la chambre de combustion principale (8) dans le sens d'écoulement de l'air (F), **caractérisé en ce que** ladite chambre de combustion auxiliaire est agencée dans ledit dispositif d'injection (6) et **en ce que** ladite tuyère d'échappement secondaire débouche dans ladite chambre d'injection (5).

9. Moteur selon la revendication 8, **caractérisé en ce qu'**il comporte une pluralité de chambres de combustion auxiliaires agencées dans ledit dispositif d'injection (5).

10. Moteur selon l'une quelconque des revendications 1 à 9,
**caractérisé en ce qu'**il intègre de plus un mode accélérateur, pour au moins une accélération initiale, dans lequel on réalise une combustion utilisant du comburant qui est stocké dans un réservoir à comburant (R2), et **en ce que** ledit réservoir de stockage (R2) de l'air détourné correspond audit réservoir à comburant (R2).

## Patentansprüche

1. Antriebsanlage mit mindestens einem sowohl mit Überschall- als auch Unterschallverbrennung arbeitendem Staustrahlantrieb und mit mindestens einem Hauptantriebssystem (3, 4, 5, 8), das Treibstoff verbrennt und mindestens einen Lufteinlass (3) für einen Lufteinlauf (F), eine Hauptverbrennungskammer (8) und eine Hauptschubdüse (4) aufweist, wobei ein Teil der durch den Lufteinlass (3) aufgenommenen Luft vor ihrem Eintritt in die Verbrennungskammer (8) vom Lufteinlauf (F) weggeleitet und in ersten Vorrichtungen (10) gespeichert wird, **dadurch gekennzeichnet,**
- **dass** die ersten Vorrichtungen (10) die im Unterschallverbrennungsmodus umgelenkte Luft speichern; und
- **dass** zweite Vorrichtungen (11) vorgesehen sind, um im Überschallverbrennungsmodus einen Teil eines Treibstoffs der Antriebsanlage (1) zusammen mit der Luft zu verbrennen, die von den ersten Vorrichtungen (10) gespeichert wurde, bevor er in das Hauptantriebssystem (3, 4, 5, 8) eingespritzt wird.

2. Antriebsanlage gemäß Anspruch 1,
**dadurch gekennzeichnet, dass** die ersten Vorrichtungen (10) Mittel (12) zum Abkühlen und Verflüssigen der umgelenkten Luft umfassen sowie mindestens einen Speichertank (R2), um die Luft nach ihrer Verflüssigung speichern.

3. Antriebsanlage gemäß Anspruch 2,
**dadurch gekennzeichnet, dass** die Mittel (12) zur Verflüssigung der Luft mindestens einen Wärmetauscher (13) aufweisen, der einen Treibstoff der Antriebsanlage (1) verwendet.

4. Antriebsanlage gemäß Anspruch 3,
**dadurch gekennzeichnet, dass** der Wärmetauscher (13) außerdem ein Hilfs-Fluid verwendet, das dazu dient, im Falle von Undichtigkeiten jeglichen Kontakt zwischen der Luft und dem Treibstoff zu verhindern.

5. Antriebsanlage gemäß einem der Ansprüche 1 bis 4,
**dadurch gekennzeichnet, dass** die zweiten Vorrichtungen (11) mindestens eine Hilfs-Verbrennungskammer (14) aufweisen, die über mindestens eine sekundäre Schubdüse (15) verfügt.

6. Antriebsanlage gemäß Anspruch 5,
**dadurch gekennzeichnet, dass** die sekundäre Schubdüse so angeordnet ist, dass sie in die Hauptverbrennungskammer (8) mündet.

7. Antriebsanlage gemäß einem der Ansprüche 5 und 6,
**dadurch gekennzeichnet, dass** die sekundäre Schubdüse (15) so angeordnet ist, dass sie in die Hauptschubdüse (4) mündet.

8. Antriebsanlage gemäß einem der Ansprüche 5 bis 7 mit mindestens einer Einspritzvorrichtung (6), um einen Treibstoff in eine Einspritzkammer (5) einzuspritzen, die sich in Strömungsrichtung der Luft (F) vor der Hauptverbrennungskammer (8) befindet,
**dadurch gekennzeichnet, dass** die Hilfsverbrennungskammer in der Einspritzvorrichtung (6) angeordnet ist und die sekundäre Schubdüse in die Einspritzkammer (5) mündet.

9. Antriebsanlage gemäß Anspruch 8,
**dadurch gekennzeichnet, dass** sie eine Vielzahl an Hilfs-Verbrennungskammern aufweist, die in der Einspritzvorrichtung (5) angeordnet sind.

10. Antriebsanlage gemäß einem der Ansprüche 1 bis 9,
**dadurch gekennzeichnet, dass** in ihr außerdem ein Beschleunigungsmodus für mindestens eine Anfangsbeschleunigung integriert ist, in dem eine Verbrennung unter Verwendung eines Oxidators stattfindet, der in einem Oxidatortank (R2) gespeichert wird, und dass der Tank zur Speicherung der umgeleiteten Luft (R2) auch als Oxidatortank (R2) dient.

## Claims

1. Hybrid engine capable of employing at least a ramjet mode and a super ramjet mode and comprising at least one main engine system (3, 4, 5, 8) which burns fuel and which comprises at least one air inlet (3) for an air stream (F), a main combustion chamber (8) and a main jetpipe (4), some of the air tapped by the said air inlet (3) being diverted from the air stream (F) before it enters the said combustion chamber (8) and stored in first means (10),
**characterized in that**:
- the said first means (10) store the air thus diverted in ramjet mode; and
- **in that** second means (11) are provided for burning, in super ramjet mode, some of a fuel of the said engine (1) with the air stored by the said first means (10), before injecting it into the said main engine system (3, 4, 5, 8).

2. Engine according to Claim 1,
**characterized in that** the said first means (10) comprise means (12) for cooling and liquefying the diverted air and at least one storage tank (R2) for storing the air thus liquefied.

3. Engine according to Claim 2,
**characterized in that** the said means (12) for liquefying the air comprise at least one exchanger (13) using a fuel of the engine (1).

4. Engine according to Claim 3,
**characterized in that** the said exchanger (13) additionally uses an auxiliary fluid intended, in the event of leaks, to prevent any contact between the air and the said fuel.

5. Engine according to any one of Claims 1 to 4,
**characterized in that** the said second means (11) comprise at least one auxiliary combustion chamber (14) equipped with at least one secondary jetpipe (15).

6. Engine according to Claim 5,
**characterized in that** the said secondary jetpipe is designed to open into the said main combustion chamber (8).

7. Engine according to either of Claims 5 and 6,
**characterized in that** the said secondary jetpipe (15) is designed to open into the said main jetpipe (4).

8. Engine according to one of Claims 5 to 7, comprising at least one injection device (6) for injecting a fuel into an injection chamber (5) that lies upstream of the main combustion chamber (8) in the direction in which the air (F) flows,
**characterized in that** the said auxiliary combustion chamber is arranged in the said injection device (6) and **in that** the said secondary jetpipe opens into the said injection chamber (5).

9. Engine according to Claim 8,
**characterized in that** it comprises a number of auxiliary combustion chambers arranged in the said injection device (5).

10. Engine according to any one of Claims 1 to 9,
**characterized in that** it additionally incorporates an accelerator mode, for at least an initial acceleration,
in which mode combustion is performed using oxidizing agent stored in an oxidizing-agent tank (R2), and **in that** the said diverted-air storage tank (R2) corresponds to the said oxidizing-agent tank (R2).
